# EUROPEAN PATENT SPECIFICATION

(11) **EP 2 952 082 B1**
(45) Date of publication and mention of the grant of the patent: **11.10.2017**
(21) Application number: 14171629.0
(22) Date of filing: 06.06.2014
(51) Int. Cl.: A01D 33/08

(54) **Device for removing soil from tuberous plants, such as potatoes**
Vorrichtung zur Beseitigung von Schmutz von Knollengewächsen wie Kartoffeln
Dispositif d'élimination des salissures sur des plantes à tubercule, tels que des pommes de terre

(43) Date of publication of application: 09.12.2015
(73) Proprietor: Machinefabriek D.T. Dijkstra B.V., 8304 AE Emmeloord (NL)
(72) Inventor: Blokland, Jarno Jacobus Hendrik, 8356 HG Blokzijl (NL)
(74) Representative: 't Jong, Bastiaan Jacob

(56) References cited:
- DE-A1- 3 027 651
- GB-A- 2 379 853
- UA-C2- 79 701
- UA-C2- 81 159
- US-A- 5 697 451

## Description

The invention relates to a device for removing soil from tuberous plants, such as potatoes according to the preamble of claim 1. Such a device, known from GB 2379853, is also called a roller soil sieve and is typically used for processing tuberous plants, such as potatoes, after the plants have been harvested. When the plants have been removed from the ground, soil is typically sticking to the plants. Depending on the type of soil it is more or less difficult to clean the tuberous plants.

It is known in the prior art to transport the plants over a roller conveyor. Due to the undulating surface of the roller conveyor, the tuberous plants will be rotated and any soil coming lose from the plants falls between the rollers. The cleaned plants are transported further over the rollers for further processing.

Whether the plants will be cleaned sufficiently depends on the length of the roller conveyor and the type of soil from which the tuberous plants were harvested. If the soil is for example clay, then the plants will require a longer cleaning time on the roller conveyor, than when the soil would be sand.

One could design a sufficient long roller conveyor for each type of soil, but if the plants are cleaned to long on the roller conveyor, the plants could also be damaged.

US 5697451 discloses a device for removing soil from tuberous plants, wherein the cleaning time of the plants is adjustable by tilting the roller surface and by adjusting the pitch of the rollers. The tilting of the roller surface ensures that the tuberous plant remain longer on the roller surface, but a disadvantage is that the exit edge of the roller surface is variable, such that subsequent processing devices should be adapted to this variable height.

When the pitch of the rollers is changes, the length of the roller conveyor changes, which also has impact on further processing equipment. Also, changing the pitch of the rollers could also result in more loss of plants, as the smaller species will fall between the rollers together with the removed soil.

NL 9401573 discloses another type of roller conveyor, in which the tuberous plants are transported in axial direction of the rollers. The rollers are rotated reciprocally, such that the plants can slide down along the conveyor, while the soil is removed.

To adapt this prior art device to the type of soil to be removed, the reciprocating speed can be adapted and the angle of the roller conveyor can be changed. This variable angle again has an impact on the subsequent devices processing the cleaned plants.

It is accordingly an object of the invention to reduce or even remove the above mentioned disadvantages.

This object is achieved according to the invention with a device for removing soil from tuberous plants, such as potatoes, according to claim 1.

Because the first and second stationary rollers are fixed to the frame, the entry and exit of the device according to the invention remains fixed, such that any movements of the sub-frame does not have any effect on the subsequent devices.

The movement of the first end roller and the second end roller along the first semi-circular path and the second semi-circular path furthermore ensures that the pitch between the stationary rollers and their adjacent end rollers remains constant. This avoid any damage to the tuberous plants or loss via a changing spacing between rollers.

As the movement of the sub-frame is controlled by the paths of the end rollers, a wavy movement of the roller surface is obtained. It has proven that this provides a good cleaning action. By changing the speed of the wavy movement and by changing the speed of the rollers, the device can easily be adjusted to the type of soil sticking to the tuberous plants.

Preferably, the pitch between the number of parallel rollers is constant and wherein the radii of the first and second semi-circular path are equal to the pitch.

In a preferred embodiment of the device according to the invention the spacing between the first and second stationary rollers is smaller than the outer distance between the first and second end roller. When moving the sub-frame, it cannot pass the space between the first and second stationary rollers simply by moving the sub-frame up and down. It needs first to be tilted before it can be moved either up or down. This will ensure that the tuberous plants will roll back and forth over the rollers of the sub-frame, similarly as a floating object on the waves of a sea.

In a further preferred embodiment of the device according to the invention the sub-frame is movable arranged in the main frame by hingedly arranged links extending from the axis of the first stationary roller to the axis of the first end roller and from the axis of the second stationary roller to the second end roller.

With the hingedly arranged links a cost effective and reliable connection is achieved of the sub-frame to the main frame, while obtaining the semi-circular paths for both end rollers.

Yet another embodiment of the device according to the invention further comprises driving means for driving the movement of the sub-frame, which driving means comprise at least one driven axle arranged to the main frame, a guide rail radially arranged to the driven axle and a guide element guided along the guide rail, which guide element is arranged to the sub-frame.

The rotation of the guide rail with the guide element guided along the guide rail will ensure that the sub-frame is moved up and down, but also back and forth, such that the sub-frame will make a wavy movement.

By controlling the speed of the driven axle, one can control the speed of the wavy motion of the sub-frame and accordingly the speed with which the tuberous plants are transported through the device of the invention.

Two or more guide rails with guide elements can be provided when necessary, for example on both axial ends of the sub-frame.

Preferably, the guide element is arranged centered between the first and second end rollers.

In yet another embodiment of the device according to the invention the stationary rollers and the rollers of the sub-frame are rotary driven. The driven rotation of the rollers further contributes to the cleaning action of the device. Varying the speed of the rollers also provides a second control for the cleaning action of the device

In still a further embodiment of the device according to the invention adjacent rollers of the sub-frame have an opposite direction of rotation.

These and other features of the invention will be elucidated in conjunction with the accompanying drawings.
Figure 1 shows a perspective, cross sectional view of an embodiment of the device according to the invention.
Figures 2A - 2F show schematically the movement of the device of figure 1.
Figure 3 shows a schematic view of the drive means for the device according to figure 1.

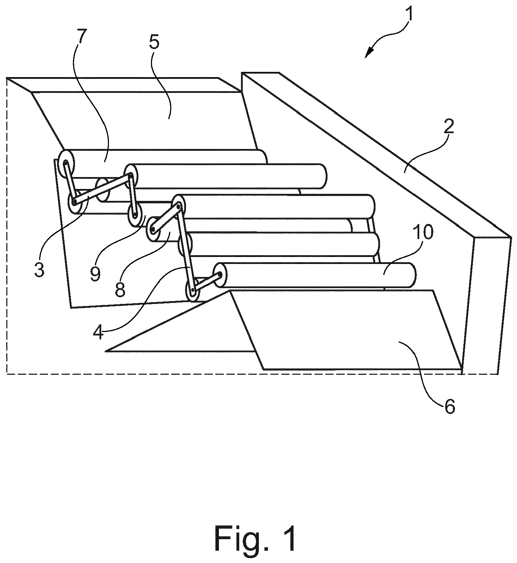

Figure 1 shows a perspective, cross sectional view of an embodiment 1 of the device according to the invention.

This device 1 has a main frame 2 in which two subframes 3, 4 are movably arranged. The device 1 has a feed plate 5 along which tuberous plants, such as potatoes, are fed to the device 1 and has a discharge plate 6 along which cleaned plants are discharged from the device 1.

The device 1 has two first stationary rollers 7, 8 and two second stationary rollers 9, 10, with each in between a sub-frame 3, 4.

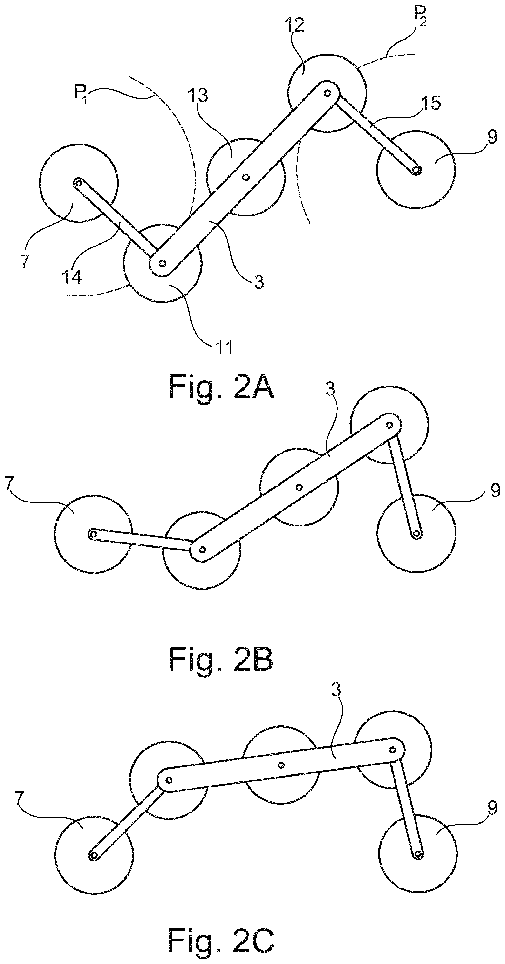

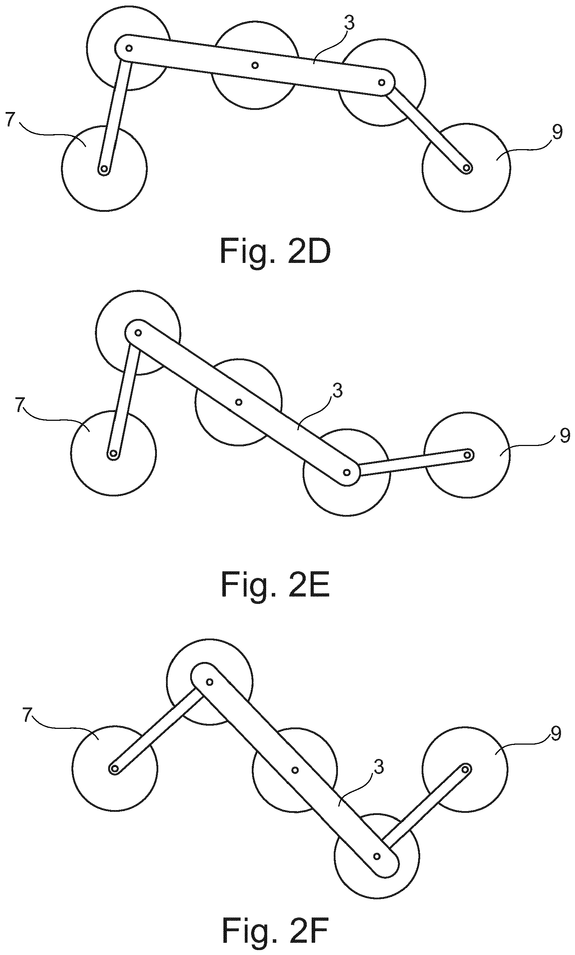

Figures 2A - 2F show schematically the movement of the sub-frame 3 within the device 1 of figure 1.

As shown in figure 2A, the sub-frame 3 has a first end roller 11, a second roller 12 and an additional roller 13 in between. The first end roller 11 is connected with its axis via a link 14 to the axis of the first stationary roller 7. Also, the second end roller 12 is connected with its axis via a link 15 to the axis of the second stationary roller 9. This ensures that the first end roller 11 is movable along a semi-circular path P₁ and the second end roller 12 is movable along a semi-circular path P₂.

As shown in figures 2B - 2F, the frame 3 will execute a wave-shaped motion when the sub-frame 3 is urged up and down and urged left and right. The figures 2A - 2F show half a cycle of the wave-shaped motion. Due to this wave-shaped motion the potatoes will roll over each other and along the rotating rollers 7 - 13 such that any soil is removed.

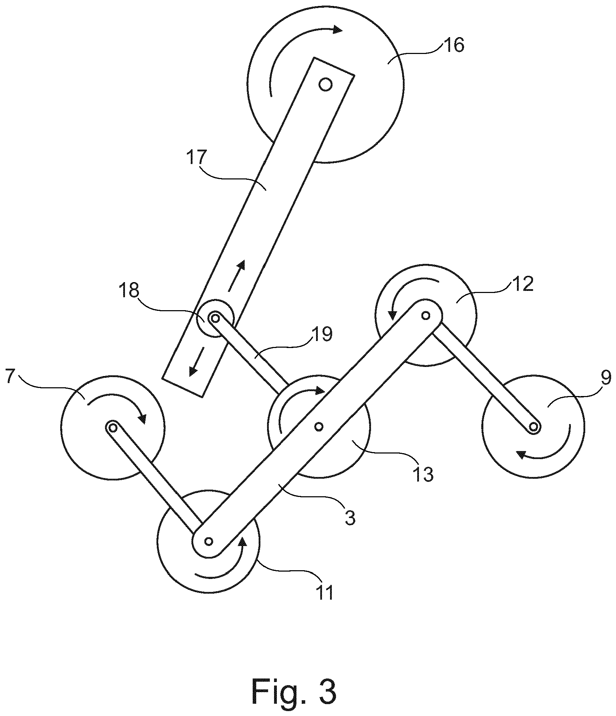

Figure 3 shows a schematic view of the drive means for the device 1 according to figure 1. The drive means have a rotating axle 16 with a guide rail 17 extending radially. A guide roller 18 is movable within the guide rail 17 and is attached to the sub-frame 3 via a connecting beam 19.

By the rotation of the axle 16, the guide roller 18 and accordingly the sub-frame 3 will be urged up and down and will be urged left and right, such that the sub-frame 3 executes the wave-shaped motion shown in the figures 2A - 2F.

## Claims

1. Device (1) for removing soil from tuberous plants, such as potatoes, which device (1) comprises:
- a main frame (2);
- a first stationary roller (7, 8) arranged in the main frame (2);
- a second stationary roller (9, 10) arranged in the main frame (2) parallel to and at a distance of the first stationary roller (7, 8);
- a sub-frame (3, 4) arranged movable in the main frame;
- a number of parallel rollers (11, 12, 13) arranged in the sub-frame (3, 4) and arranged parallel to the first (7, 8) and second stationary rollers (9, 10);
wherein the number of rollers (11, 12, 13) comprises a first end roller (11) arranged at one end of the sub-frame (3, 4) and a second end roller (12) arranged at the opposite end of the sub-frame (3, 4);
wherein the axis of the first end roller (11) is movable along a first semi-circular path (P1) with the center coinciding with the axis of the first stationary roller (7, 8) ;
**characterized in that**
the axis of the second end roller (12) is movable along a second semi-circular path (P2) with the center coinciding with the axis of the second stationary roller (9, 10).

2. Device (1) according to claim 1, wherein the pitch between the number of parallel rollers (7 - 13) is constant and wherein the radii of the first and second semi-circular path (P1, P2) are equal to the pitch.

3. Device (1) according to claim 1 or 2, wherein the spacing between the first (7, 8) and second (9, 10) stationary rollers is smaller than the outer distance between the first and second end roller (11, 12).

4. Device (1) according to any of the preceding claims, wherein the sub-frame (3, 4) is movable arranged in the main frame (2) by hingedly arranged links (14, 15) extending from the axis of the first stationary roller (7, 8) to the axis of the first end roller (11) and from the axis of the second stationary roller (9, 10) to the second end roller (12).

5. Device (1) according to any of the preceding claims, further comprising driving means (16 - 19) for driving the movement of the sub-frame (3, 4), which driving means (16 - 19) comprise at least one driven axle (16) arranged to the main frame (2), a guide rail (17) radially arranged to the driven axle (16) and a guide element (18) guided along the guide rail (17), which guide element (18) is arranged to the sub-frame (3, 4).

6. Device (1) according to claim 5, wherein the guide element (18) is arranged centered between the first and second end rollers (11, 12).

7. Device (1) according to any of the preceding claims, wherein the stationary rollers (7, 8, 9, 10) and the rollers (11, 12, 13) of the sub-frame (3, 4) are rotary driven.

8. Device (1) according to claim 7, wherein adjacent rollers (11, 12, 13) of the sub-frame (3, 4) have an opposite direction of rotation.

## Patentansprüche

1. Vorrichtung (1) zum Entfernen von Erde aus Knollenpflanzen, wie Kartoffeln, wobei die Vorrichtung (1) umfasst:
- einen Hauptrahmen (2);
- eine erste stationäre Rolle (7, 8), die im Hauptrahmen (2) angeordnet ist;
- eine zweite stationäre Rolle (9, 10), die in dem Hauptrahmen (2) parallel zu und in einer Entfernung von der ersten stationären Rolle (7, 8) angeordnet ist;
- ein im Hauptrahmen beweglich angeordneter Hilfsrahmen (3, 4);
- eine Anzahl von parallelen Rollen (11, 12, 13), die in dem Hilfsrahmen (3, 4) angeordnet sind und parallel zu der ersten (7, 8) und zweiten stationären Rolle (9, 10) angeordnet sind;
wobei die Anzahl von Rollen (11, 12, 13) eine erste Endrolle (11) umfasst, die an einem Ende des Hilfsrahmens (3, 4) angeordnet ist, und eine zweite Endrolle (12), die an dem entgegengesetzten Ende des Hilfsrahmens (3, 4) angeordnet ist;
wobei die Achse der ersten Endrolle (11) entlang einer ersten halbkreisförmigen Bahn (P1) bewegbar ist, wobei deren Mittelpunkt mit der Achse der ersten stationären Rolle (7, 8) zusammenfällt;
**dadurch gekennzeichnet** das
wobei die Achse der zweiten Endrolle (12) entlang einer zweiten halbkreisförmigen Bahn (P2) bewegbar ist, wobei deren Mittelpunkt mit der Achse der zweiten stationären Rolle (9, 10) zusammenfällt.

2. Vorrichtung (1) nach Anspruch 1, wobei die Teilung zwischen der Anzahl an parallelen Rollen (7 - 13) konstant ist und wobei die Radien der ersten und zweiten halbkreisförmigen Bahn (P1, P2) gleich der Teilung sind.

3. Vorrichtung (1) nach Anspruch 1 oder 2, wobei der Zwischenraum zwischen der ersten (7, 8) und der zweiten (9, 10) stationären Rolle kleiner als die äußere Entfernung zwischen der ersten und der zweiten Endrolle (11, 12) ist.

4. Vorrichtung (1) nach einem der vorhergehenden Ansprüche, **dadurch gekennzeichnet, dass** der Hilfsrahmen (3, 4) durch gelenkig angeordnete Bindeglieder (14, 15) beweglich im Hauptrahmen (2) angeordnet ist, die sich von der Achse der ersten stationären Rolle (7, 8) zu der Achse der ersten Endrolle (11) und von der Achse der zweiten stationären Rolle (9, 10) zur zweiten Endrolle (12) erstrecken.

5. Vorrichtung (1) nach einem der vorhergehenden Ansprüche, ferner umfassend eine Antriebseinrichtung (16 - 19) zum Antreiben der Bewegung des Hilfsrahmens (3, 4), wobei die Antriebseinrichtung (16 - 19) mindestens eine angetriebene Welle (16) umfasst, die an dem Hauptrahmen (2) angeordnet ist, eine Führungsschiene (17), die radial an der angetriebenen Welle (16) angeordnet ist und ein Führungselement (18), das entlang der Führungsschiene (17) geführt ist, wobei das Führungselement (18) am Hilfsrahmen (3, 4) angeordnet ist.

6. Vorrichtung (1) nach Anspruch 5, wobei das Führungselement (18) mittig zwischen der ersten und der zweiten Endrolle (11, 12) angeordnet ist.

7. Vorrichtung (1) nach einem der vorhergehenden Ansprüche, bei der die stationären Rollen (7, 8, 9, 10) und die Rollen (11, 12, 13) des Hilfsrahmens (3, 4) rotationsangetrieben sind.

8. Vorrichtung (1) nach Anspruch 7, wobei benachbarte Rollen (11, 12, 13) des Hilfsrahmens (3, 4) eine entgegengesetzte Drehrichtung aufweisen.

## Revendications

1. Dispositif (1) pour enlever de la terre à partir de plantes à tubercules, telles que des pommes de terre, ledit dispositif (1) comprenant :
- un cadre principal (2) ;
- un premier rouleau stationnaire (7, 8) monté dans le cadre principal (2) ;
- un second rouleau stationnaire (9, 10) monté dans le cadre principal (2) parallèlement au premier rouleau stationnaire (7, 8) et à distance de ce dernier ;
- un cadre secondaire (3, 4) monté en mobilité dans le cadre principal ;
- un certain nombre de rouleaux parallèles (11, 12, 13) montés dans le cadre secondaire (3, 4) et disposés parallèlement au premier (7, 8) et au second rouleau stationnaire (9, 10) ;
dans lequel lesdits plusieurs rouleaux (11, 12, 13) comprennent un premier rouleau terminal (11) monté à une extrémité du cadre secondaire (3, 4) et un second rouleau terminal (12) monté à l'extrémité opposée du cadre secondaire (3, 4) ;
dans lequel l'axe du premier rouleau terminal (11) est mobile le long d'une première voie semi-circulaire (P1) dont le centre coïncide avec l'axe du premier rouleau stationnaire (7, 8) ;
**caractérisé en ce que**
l'axe du second rouleau terminal (12) est mobile le long d'une seconde voie semi-circulaire (P2) dont le centre coïncide avec l'axe du second rouleau stationnaire (9, 10).

2. Dispositif (1) selon la revendication 1, dans lequel le pas entre lesdits plusieurs rouleaux parallèles (7 - 13) est constant et dans lequel les rayons de la première et de la seconde voie semi-circulaire (P1, P2) sont égaux au pas.

3. Dispositif (1) selon la revendication 1 ou 2, dans lequel l'écartement entre le premier (7, 8) et le second (9, 10) rouleau stationnaire est inférieur à la distance externe entre le premier et le second rouleau terminal (11, 12).

4. Dispositif (1) selon l'une quelconque des revendications précédentes, dans lequel le cadre secondaire (3, 4) est monté en mobilité dans le cadre principal (2) via des articulations (14, 15) s'étendant depuis l'axe du premier rouleau stationnaire (7, 8) jusqu'à l'axe du premier rouleau terminal (11) et depuis l'axe du second rouleau stationnaire (9, 10) jusqu'au second rouleau terminal (12).

5. Dispositif (1) selon l'une quelconque des revendications précédentes, comprenant en outre des moyens d'entraînement (16 - 19) pour entraîner le mouvement du cadre secondaire (3, 4), lesdits moyens d'entraînement (16 - 19) comprenant au moins un essieu entraîné (16) monté sur le cadre principal (2), un rail de guidage (17) monté en direction radiale sur l'essieu entraîné (16) et un élément de guidage (18) guidé le long du rail de guidage (17), ledit élément de guidage (18) étant monté sur le cadre secondaire (3, 4).

6. Dispositif (1) selon la revendication 5, dans lequel l'élément de guidage (18) est monté en position centrale entre le premier et le second rouleau terminal (11, 12).

7. Dispositif (1) selon l'une quelconque des revendications précédentes, dans lequel les rouleaux stationnaires (7, 8, 9, 10) et les rouleaux (11, 12, 13) du cadre secondaire (3, 4) sont entraînés en rotation.

8. Dispositif (1) selon la revendication 7, dans lequel des rouleaux adjacents (11, 12, 13) du cadre secondaire (3, 4) possèdent une direction de rotation opposée.
